# EUROPEAN PATENT APPLICATION

(11) **EP 0 959 482 A1**
(43) Date of publication of application: **24.11.1999**
(21) Application number: 97901797.7
(22) Date of filing: 31.01.1997
(51) Int. Cl.: H01G 9/058, H01M 4/02, H01M 4/04

(54) **ACTIVATED CARBON ELECTRODE AND PROCESS FOR PRODUCING THE SAME**

(30) Priority: 02.02.1996 JP 4063296
(71) Applicant: Takeda Chemical Industries, Ltd., Osaka-shi, Osaka 541-0045 (JP)
(72) Inventor: MOURI, Motoya, Suita-shi, Osaka 565 (JP); UEDA, Takeshi, Suita-shi, Osaka 565 (JP); KUROSAKI, Takeo, Osaka-shi, Osaka 532 (JP); TSUJI, Masanori, Akashi-shi, Hyogo 674 (JP); KIMURA, Toshio, Takeda Yakuhin Syukugawa Ryo 407, Nishinomiya-shi, Hyogo 662 (JP); MUKAI, Kiyoshi, Moriguchi-shi, Osaka 570 (JP)
(74) Representative: von Kreisler, Alek, Dipl.-Chem.
(86) International application number: JP9700230
(87) International publication number: WO9728547

(57) **Abstract**

The capacitance of a conventional activated carbon electrode is insufficient when the capacitor is discharged in a large current. The present inventors made extensive studies to obtain a molded activated carbon electrode which can be discharged in a large current instantaneously, can be handled easily, and has an excellent impact resistance, and as a result, they found that an activated carbon electrode obtained by molding a mixture containing activated carbon, a vinylidene chloride polymer or copolymer, and an organic material to be thermally decomposed by calcining to form macropores, and a molding auxiliary if necessary, and then calcining the resulting molded material, has the most suitable macropores for ion migration to enable discharging a large current instantaneously.

## Description

### Technical Field

The present invention relates to an activated carbon electrode for an electric double-layer capacitor and a cell.

### Background Art

The electric double-layer capacitor is one utilizing an electric double layer occurring in the interface between a solid polarizing electrode and an electrolyte, and has considerably higher capacitance than other cells. it is excellent in charge/discharge cycle characteristics as well as in rapid charge, is maintenance-free, and does not cause any environmental pollution. Therefore, it attracts particular attention recently as a small-sized back-up power source for microcomputers and IC memories. Usually, said solid polarizing electrode in the electric double-layer capacitor makes use of powdered activated carbon or fibrous activated carbon.

Conventionally, electrolytes used in the electric double-layer capacitor have been classified roughly into an organic solvent type and an aqueous solution type, but recently solid electrolytes also came to be used. The organic solvent type is high in electrical strength and thus advantageously miniaturized, and metals can also be used for its container. The aqueous solution-type electrolyte has high electrical conductivity and is thus suitable for low equivalent series resistance (ESR), and it is not influenced by humidity and is excellent in environmental characteristics.

In cases where the fibrous activated carbon is used as an electrode for the electric double-layer capacitor, there are problems of low packing density and large internal resistance as compared with powdered activated carbon. In cases where the powdered activated carbon is used, it is usually mixed with an electrolyte solution to form a slurry paste which is then integrated into a capacitor, where it should be sealed under pressure to raise packing density, so that there are the problems that the process for producing the capacitor is complicated and the handling characteristics properties of the electrode are poor.

Under these circumstances, a method of forming powdered activated carbon into a sheet by adding a binder (Japanese Patent Appln. Laid-Open Publication Nos. 97004/94 and 043348/93). However, when electric double-layer capacitors are used e.g. as main or auxiliary power source of electric automobiles, they should be capable of being discharged in a large current instantaneously, but those proposed up to now are insufficient in capacitance when discharged in a large current.

### Disclosure of the Invention

To obtain a molded activated carbon electrode which can be discharged in a large current instantaneously, can be handled easily, and has an excellent impact resistance, the present inventors made extensive studies on the type of activated carbon material, use of an auxiliary starting material and a molding auxiliary, and their types as well as thermal treatment conditions after molding. As a result, the present inventors found that an active carbon electrode obtained by molding a mixture containing powdered activated carbon, a vinylidene chloride polymer, and an organic material which is thermally decomposed by calcining to form macropores, and a molding auxiliary if necessary, and then calcining the resulting molded material, has the most suitable macropores for ion migration to enable discharge of a large current instantaneously, and they made further study to complete the present invention. That is, the present invention relates to:
(1) Activated carbon electrode obtained by calcining a starting molding material for electrodes comprising activated carbon, a vinylidene chloride polymer and/or a vinylidene chloride copolymer, and other organic material to be thermally decomposed by calcining to form macropores.
(2) The activated carbon electrode according to item (1) wherein the other organic material is not molten, thermally decomposed or sublimated at a temperature of less than 130 °C, and has solubility in water of 2 w/w% (25 °C) or less.
(3) The activated carbon electrode according to item (2) wherein the other organic material is a polymeric compound with a molecular weight of 1,000 or more.
(4) The activated carbon electrode according to item (3) wherein the polymeric compound is thermoplastic resin.
(5) The activated carbon electrode according to item (2) wherein the other organic material is carboxylic acid or an acid anhydride, salt or ester thereof.
(6) The activated carbon electrode according to item (1) wherein the starting molding material for electrodes comprises, as dry solid, 5 to 90 % by weight of activated carbon, 5 to 90 % by weight of a partial structure derived from a vinylidene chloride monomer and 3 to 50 % by weight of the other organic material.
(7) The activated carbon electrode according to item (1) wherein the molding auxiliary is incorporated into the starting molding material for electrodes.
(8) The activated carbon electrode according to item (7) wherein the molding auxiliary is incorporated into the starting molding material for electrodes in an amount of 0.5 to 50 % by weight as dry solid.
(9) The activated carbon electrode according to item (7) or (8) wherein the molding auxiliary is polysaccharide.
(10) The activated carbon electrode according to item (9) wherein the polysaccharide is β-1,3-glucan.
(11) The activated carbon electrode according to item (1) wherein the calcining is carried out at 500 to 1,200 °C.
(12) The activated carbon electrode according to item (1) wherein the molding material for electrodes is sheet-shaped.
(13) The activated carbon electrode according to item (1) which has a peak of macropore diameters between 9,000 and 80,000 angstrom, and the total volume of pores with a diameter of 30 angstrom or more of 0.5 to 1.1 ml/g.
(14) Process for producing activated carbon electrodes which comprises calcining at 500 to 1,200°C a starting molding material for electrodes comprising activated carbon, a vinylidene chloride polymer, and other organic material to be thermally decomposed by calcining to form macropores.
(15) The process for producing activated carbon electrodes according to item (14) wherein before calcining, the starting molding material for electrodes is subjected to pre-heating treatment at 130 to 400 °C.
(16) The process for producing activated carbon electrodes according to item (14) wherein the molding auxiliary is incorporated into the starting molding material for electrodes.

The activated carbon material used in the present invention is not particularly limited insofar as it can be conventionally used as activated carbon material, and examples include plant-origin raw materials or fossil raw materials such as wood, wood powder, coconut shell, by-products of pulp manufacturing, bagasse, waste molasses, peat, lignite, brown coal, bituminous coal, smokeless coal, residues remaining after petroleum distillation, petroleum pitch, coke, coal tar etc., various kinds of synthetic resin such as phenol resin, vinyl chloride resin, vinyl acetate resin, melamine resin, urea resin, resorcinol resin, celluloid, epoxy resin, polyurethane resin, polyester resin, polyamide resin etc., synthetic rubber such as polybutylene, polybutadiene, polychloroprene etc. and other synthetic wood and synthetic pulp. Among these starting materials for activated carbon, the coconut shell is preferably used.

The method of carbonizing and activating the starting material for activated carbon include conventionally known method for production of activated carbon, such as fixed bed method, mobile bed method, fluidized bed method, slurry method, rotary kiln method etc. The carbonization method includes a calcining method using inert gases such as nitrogen gas, carbon dioxide, helium, argon, xenon, neon, carbon monoxide, combustion exhaust gas and a mixed gas based on these inert gases with other gases.

The activation method includes a gas activation method in which calcining is conducted using activating gases such as steam, hydrogen chloride, carbon monoxide, carbon dioxide, oxygen etc. and a chemical activation method in which the starting material for activated carbon is activated in the presence of alkali metal hydroxide such as sodium hydroxide, potassium hydroxide etc., alkaline earth metal hydroxide such as calcium hydroxide etc., inorganic acids such as boric acid, phosphoric acid, sulfuric acid, hydrochloric acid etc., and inorganic salts such as zinc chloride etc. Temperature and time for the carbonization are usually 250 to 1,200 °C and 10 minutes to 30 hours, preferably 300 to 1,000 °C and 15 minutes to 25 hours, more preferably 350 to 850 °C and 20 minutes to 20 hours. The temperature and time for activation are usually 200 to 1,200 °C and 10 minutes to 30 hours, preferably 400 to 1,100 °C and 15 minutes to 25 hours, more preferably 600 to 1,000 °C and 20 minutes to 20 hours.

The specific surface area of the activated carbon used in the present invention is usually 500 to 4,000 m²/g, preferably 700 to 3,000 m²/g, more preferably 900 to 2,500 m²/g, as determined by the B.E.T. method using nitrogen absorption at a temperature of liquid nitrogen.

The activated carbon is ground into particles with a desired size if necessary, and their particle size is regulated by classification if necessary. The particle size suitable for the object of the present invention, as determined by Coulter counter, usually has a medium diameter of 0.1 to 150 µm, preferably 0.5 to 100 µm, more preferably 1 to 80 µm.

The vinylidene chloride polymer used in the present invention is one obtained by polymerizing vinylidene chloride solely, that is, a homopolymer of vinylidene chloride.

The vinylidene chloride copolymer is a copolymer of a vinylidene chloride monomer and other copolymerizable monomers.

Other copolymerizable monomers copolymerized with vinylidene chloride may be any known monomers, and the typical examples include vinyl compounds such as vinyl chloride, vinyl acetate, alkyl vinyl ether etc., acrylic compounds and methacrylic compounds such as acrylonitrile, acrylic acid, acrylyl halide, acrylate, methacrylic acid, methacrylate etc. These copolymerizable monomers can be used in arbitrary combination. Among these copolymers, those particularly preferable are copolymers of vinylidene chloride and (meth)acrylic acid (ester).

The copolymerization reaction of vinylidene chloride can be conducted in a method known in the art. The ratio of a partial structure derived from a vinylidene chloride monomer constituting a vinylidene chloride copolymer to other partial structure derived from a copolymerizable monomer is usually in the range of 5-95 : 95-5 % by weight, preferably 10-90 : 90-10 % by weight, more preferably 15-85 : 85-15 % by weight.

The vinylidene chloride polymer and/or vinylidene chloride copolymer used may be incorporated into conventionally known agents such as stabilizers, anti-oxidants and UV absorbers for prevention of deterioration by heat and light, auxiliary agents, plasticizer and anti-static agents for improving moldability at the time of molding, if necessary. The states of the polymer may be in any state such as solid and liquid containing solids or liquid dispersed in a liquid solvent, for example, emulsion, suspension and slurry, where a part of said vinylidene chloride and other copolymerizable components may remain as the monomers without being polymerized or if necessary they may be added.

The organic materials other than the vinylidene chloride polymer used in the present invention, which are thermally decomposed by calcining to form macropores, are those thermally decomposed by calcination, and disappear or are carbonized to form macropores. However, they are preferably not molten or decomposed when the molding material for electrodes is dried. Accordingly, the organic materials are preferably those not molten, thermally decomposed or sublimated at a temperature of less than 130 °C so that the activated carbon electrode of the present invention has the preferable macropores described below. Some polymeric compounds have glass transition points which are however not regarded as melting points in the present invention. Some organic materials have indefinite melting points and thermal decomposition points. In in such cases, it is assumed that their thermal decomposition point is the temperature at which their weight is initiated to decrease in a thermobalance.

These organic materials are present preferably as solids, that is, particles with a certain particle size in the starting molding material for electrodes, where their water solubility is 2 w/w % (25 °C) or less, preferably 1 w/w % or less, more preferably 0.8 w/w % or less. The particle sizes of the organic materials are usually 0.1 to 200 µm, preferably 0.2 to 100 µm, more preferably 0.3 to 80 µm.

Preferable examples of organic materials include carboxylic acids and salts, esters and acid anhydrides thereof. The carboxylic acids include e.g. C₄₋₂₀ aliphatic saturated divalent carboxylic acids such as adipic acid, suberic acid etc., C₅₋₂₀ aliphatic unsaturated monovalent carboxylic acids such as sorbic acid, C₂₋₂₀ aliphatic unsaturated divalent carboxylic acids such as fumaric acid etc., C₅₋₆ cycloalkyl dicarboxylic acids such as cyclopentane dicarboxylic acid, cyclohexane dicarboxylic acid etc., aromatic divalent carboxylic acids such orthophthalic acid, isophthalic acid, terephthalic acid etc. and amino acids such as glutamic acid, aspartic acid etc.

Among these, aliphatic saturated divalent carboxylic acids such as adipic acid etc., aliphatic unsaturated divalent carboxylic acids such as fumaric acid etc., and aromatic divalent carboxylic acids such as isophthalic acid, terephthalic acid etc. are preferable.

Salts of these carboxylic acids include e.g. salts with alkali metals such as sodium, potassium etc., alkaline earth metals such as calcium, magnesium etc., and with trivalent metals such as aluminum. In particular, calcium salts such as calcium oxalate, calcium tartrate, calcium malate etc. are preferable.

Esters of such acids include e.g. C₁₋₆ alkyl esters such as methyl ester, ethyl ester etc. and C₁₋₃ alkyl phenyl esters such as phenyl etc., and if the carboxylic acid is a polybasic acid, it may be in the form of monoester, polyester and acid anhydride thereof.

Other preferable examples of organic materials are polymeric materials with molecular weights of 1,000 or more, preferably 3,000 to 500,000, more preferably 5,000 to 300,000. These polymeric compounds include e.g. petroleum type resin such as polyethylene, polypropylene etc., vinyl type resin such as polyvinyl chloride, polyvinyl acetate etc., acetal resin such as polybutyral resin etc., acrylic resin such as polyacrylic acid resin, polymethacrylic acid resin etc., styrol resin such as polystyrene etc., and thermoplastic resin such as polyamide resin etc., and thermosetting resin such as polyphenol resin, urea resin, melamine resin, polyester resin, polyurethane resin, epoxy resin etc., among which the thermosetting resin is preferably used.

For production of the activated carbon electrode of the present invention, activated carbon, a vinylidene chloride polymer and/or a vinylidene chloride copolymer, and other organic material to be thermally decomposed by calcining to form macropores, and if necessary, a molding auxiliary and water or other solvent are first added and mixed, and the mixture is molded to form a starting molding material for electrodes. Addition of the molding auxiliary facilitates molding and processing in producing a molded product, and by the addition the strength and density of the resulting molded artile may be improved.

The molding auxiliary may be any one conventionally used in molding activated carbon and ceramic, and for example, mention can be made of polysaccharides derived from natural sources such as microorganisms, plants, animals etc., as well as cellulose type compounds, polyhydric compounds and polyvinyl polymers.

The polysaccharides derived from natural sources should be understood in the commonest meaning and range from oligosaccharides with degrees of polymerization of about 10 or thereabout to polysaccharides of molecular weights of 10000 or more. The polysaccharides derived from microbial sources include e.g. dextran, gellan gum, xanthan gum, curdlan, paramylon, pullulan etc. The polysaccharides from plant sources include e.g. extraction polysaccharides such as pectin, arabinogalactan etc., seed polysaccharides such as guar gum, locust bean gum, tara gum, tamarind seed gum etc., exudate polysaccharides such as tragacanth gum, karaya gum, gum arabic, ghatti gum etc., red-seaweed polysaccharides such as carrageenan, brown-seaweed polysaccharides such as alginic acid etc., structural polysaccharides such as xylan, laminarin etc., and reserve polysaccharides such as konjak mannan. Further, the polysaccharides from animal sources include structural polysaccharides such as chitosan etc. and mucopolysaccharides such as hyaluronic acid, chondroitin sulfate etc. These polysaccharides are known as those having water retention characteristics.

Among the above-described polysaccharides derived from natural sources, glucans, particularly β-1,3-glucan mainly composed of β-1,3-glucoside linkages is preferably used. Such β-1,3-glucan includes curdlan, laminarin, paramylon, callose, pachyman, scleroglucan etc. among which curdlan and paramylon are particularly preferable. Pullulan is a glucan mainly composed of β-1,4- and β-1,6-glucoside linkages, and it can be used preferably.

As described in e.g. New Food Industry, 20 (10): 49-57 (1978), curdlan is a polysaccharide mainly composed of β-1,3-glycoside linkages, usually having thermal coagulation properties, that is, a polysaccharide which is coagulated (i.e. forming a gel) by heating in the presence of water.

Paramylon is known according to e.g. Carbohydrate Research, 25: 231-242 (1979). However, because powder of paramylon, unlike curdlan, is not coagulated by heating, it may be subjected to alkali-treatment if necessary to confer thermal coagulation properties thereon. Paramylon thus given thermal coagulation properties by alkaline treatment is included in the natural polysaccharides in the present invention. Curdlan, paramylon and other polysaccharides may be used without purification or may be purified at high degrees if necessary.

The cellulose type compound includes e.g. methyl cellulose, ethyl cellulose, carboxymethyl cellulose, carboxymethyl cellulose sodium, hydroxyethyl cellulose, hydroxypropyl methyl cellulose etc. The polyhydroxy compound includes e.g. alkylene glycols such as such as glycerin, ethylene glycol, propylene glycol, triethylene glycol, 1,3-butylene glycol etc. and polyoxyalkylene glycols such as polyethylene glycol, polypropylene glycol etc. In addition, the polyvinyl polymer includes e.g. polyvinyl alcohol, polyvinyl pyrrolidone, polyacrylic acid resin, polyacrylic acid salts such as ammonium polyacrylate, an acrylate-maleate copolymer and ammonium salts thereof. The polyacrylic acid resins may have been cross-linked. Such cross-linked polyacrylic acid resins are already known and are commercially available.

As molding auxiliaries other than those enumerated above, use can also be made of e.g. carboxymethyl starch, sodium alginate, ammonium alginate etc. Although these molding auxiliaries may be used singly, a mixture thereof may also be used.

Further, these molding auxiliaries should be contained in the organic materials used in the present invention insofar as they can achieve the object, that is, they are thermally decomposed by calcining to form macropores.

As described above, various molding auxiliaries can be used in the present invention, and particularly when polysaccharides capable of thermal coagulation, for example, curdlan and pachyman, or alkali-treated paramylon etc. are used in combination with cellulose compounds such as hydroxylpropyl methyl cellulose, a composition excellent in molding ability can be obtained, and further when the thermally coagulating polysaccharides in this molding material are thermally coagulated and dried, a high-strength molded artile can be obtained without any cracks therein as described below.

With respect to the amount (weight % in dry state) of each component in the starting molding material, activated carbon is usually 5 to 90 % by weight, preferably 10 to 80 % by weight, more preferably 15 to 70 % by weight, and the total weight of the vinylidene chloride-derived structure (i.e. the dichloroethylene structure -C(Cl)₂-CH₂-) in the vinylidene chloride polymer and/or the vinylidene chloride copolymer is usually 5 to 90 % by weight, preferably 10 to 80 % by weight, more preferably 15 to 70 % by weight, and the organic materials are usually 3 to 50 % by weight, preferably 5 to 45 % by weight, more preferably 10 to 40 % by weight.

If the vinylidene chloride copolymer is used in the present invention, the weight of the copolymer-derived structure excluding the vinylidene chloride-derived structure in the copolymer is considered as the weight of the organic material. However, the vinylidene chloride homopolymer in the starting molding material should be usually at least 5 % by weight, preferably at least 10 % by weight.

When the molding auxiliary is used, the amount thereof, as dry solid, is usually 0.5 to 50 % by weight, preferably 1 to 40 % by weight, more preferably 2 to 30 % by weight relative to the starting molding material for electrodes.

In the present invention, surface active agents known as wetting agent, such as alkylether of polyethylene glycol, or lubricants such as zinc stearate, aluminum stearate, magnesium stearate etc. may further be contained in the molding composition.

The process for producing the molding composition is not particularly limited. For example, the molding auxiliary may be added as such in the form of powder to a mixture of activated carbon powder and the organic material, and the mixture is sufficiently mixed, or alternatively the molding auxiliary is previously dissolved in a small amount of water or water-soluble organic solvent such as methanol, ethanol etc., and the mixture is added to activated carbon powder and mixed sufficiently so that the molding auxiliary is uniformly distributed. Then, a vinylidene chloride polymer and if necessary a vinylidene chloride copolymer are added to the resulting mixture and mixed sufficiently whereby a molding composition can be obtained. Further, the vinylidene chloride polymer or copolymer may have previously been mixed with activated carbon or the organic material, or if a plurality of molding auxiliaries are used, each of them may be mixed separately therewith.

The molding composition thus prepared is molded into a desired shape. To mold it into a sheet, it is possible to use any methods known in the art, such as extrusion molding method, hot extrusion molding method, injection molding method, dry press molding method, wet press molding method, casting molding method, doctor blade molding method, roll molding method etc. Among these, the extrusion molding method, various press and roll molding methods are suitable for low-cost, large scale production.

In the molding method using water, the vinylidene chloride polymer and copolymer are preferably used as latex. In particular, latex is preferable in the extrusion molding method.

The molding material is molded preferably into a sheet which shows low internal electric resistance of the resulting electrode, and its thickness is usually 0.1 to 5 mm, preferably 0.2 to 4 mm, more preferably 0.3 to 3 mm.

The molded material thus obtained is dried as necessary, and if thermally coagulating polysaccharide is used as the molding auxiliary, it is preferable that the molded material is heated in the presence of water content so that the thermally coagulating polysaccharide is thermally coagulated and then dried. In general, the molded material is heated in the presence of additional water if necessary under the control of natural evaporation of water contained in the molded material whereby the thermally coagulating polysaccharide can be coagulated. Specifically, heating by microwaves, heating in an atmosphere of saturated steam, heating in a sealed vessel etc. can be used. Although the temperature for thermal coagulation of the polysaccharide is varied depending on the type of polysaccharide used, it is usually in the range of 70 to 130 °C. A heating time is usually in the range of 0.5 to 6 hours.

By using the thermally coagulating polysaccharide as the molding auxiliary in this manner, the molded material can be strengthened, and when the molded material is then dried or thermally treated, no cracks occur in the molded material. The molded material is dried usually at room temperature to a temperature of less than 130 °C.

When the dried molded material is subjected before calcining to preliminary thermal treatment at a temperature of 130 to 400 °C , gas is generated, and then when the molded material is transferred to a calcining furnace, generation of hydrochloric acid gas hardly occurs, so it is possible to prevent not only corrosion of the calcining furnace with the acidic gas but also occurrence of cracks or warpage in the molded material at the time of subsequent calcining. Further, macropores in the electrode obtained by calcining after this preliminary heating treatment can be regulated in a suitable pore size. This thermal treatment can be carried out under either an oxygen atmosphere or a non-oxygen atmosphere.

Then, the resulting molded material for electrode is calcined. This thermal treatment is conducted usually at 500 to 1,200 °C for 15 minutes to 25 hours, preferably at 600 to 1,000 °C for 20 minutes to 20 hours. By this calcining, it can be formed into the electrode for electric double-layer capacitors according to the present invention. This calcination can be conducted in the presence of a gas such as nitrogen, argon, helium, halogen, combustion exhaust gas, steam, hydrogen chloride, carbon monoxide, carbon dioxide etc. or under vacuum. Among these, nitrogen gas or combustion exhaust gas is preferably used for calcining.

In the activated carbon electrode of the present invention, the organic matter in the molding material is thermally decomposed at the time of calcining and volatilized to form macropores which significantly improve ion migration for discharge. The peak of macropore diameters of the activated carbon electrode of the present invention, as determined by the macropore mercury porosity method (mercury injection method: in the region of 30 angstrom or more) is usually between 9,000 and 80,000 angstrom, preferably between 10,000 and 70,000 angstrom. The total volume of macropores with 30 or more angstrom in diameter is usually 0.5 to 1.1 ml/g, preferably 0.6 to 1.0 ml/g.

If the activated carbon electrode thus obtained is plate-shaped, it is formed into pieces of suitable size by cutting or punching, and a few pieces of them are overlaid via a separator and accommodated in a vessel into which an electrolyte is introduced, to give an electric double-layer capacitor unit cell.

The electrolyte includes an organic solvent type and aqueous solution type. The organic solvent type of electrolyte is generally propylene carbonate, and any known quaternary phosphonium salts and quaternary ammonium salts can be used as the electrolyte. The aqueous solution type of electrolyte is generally diluted sulfuric acid, but other inorganic salts such as borate tetrafluoride, nitrate etc. can also be used. Further, aqueous solutions whose solutes are inorganic salts such as potassium hydroxide, sodium hydroxide, ammonium hydroxide etc. can be used conveniently. The concentration of each electrolyte can be suitably selected in the range of 5 to 95 % by weight.

### Best Mode for Carrying Out the Invention

Hereinafter, the present invention is described in more detail by reference to Examples and Comparative Examples.

### Example 1

50 g curdlan as a molding auxiliary and 150 g hydroxypropyl methyl cellulose (2 % by weight of an aqueous solution with a viscosity of 100,000 cPs at 20 °C ) were added to 1,000 g coconut shell based activated carbon (BET surface area of 1,600 m²/g and an average particle diameter of 7 µm) and mixed adequately in a polyvinyl bag. Then, the mixture was introduced into a biaxial kneader, and 1,800 g vinylidene chloride polymer latex (solid content of 55 % by weight) and 2,200 g vinylidene chloride-acrylate copolymer latex (solid content of 46 % by weight; vinylidene chloride content, 50 % by weight; and acrylate content, 50 % by weight), and 100 g water were added to it under stirring, and the mixture was kneaded for 2 hours. In this kneading, cold water at 10 °C was circulated for cooling through the jacket of the kneader.

The resulting composition containing the activated carbon, vinylidene chloride polymer, and vinylidene chloride-acrylate copolymer was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness.

The sheet was dried at 115 °C for 5 hours and subjected to preliminary heating treatment at 300 °C for 2 hours, and then the dried product was placed in a sealed vessel and calcined in an electric furnace at 900 °C for 1 hour to give a sheet-shaped activated carbon electrode. The peak of macropore diameters of the resulting electrode was 45,000 angstrom and the total volume of pores with 30 angstrom or more in diameter was 0.90 ml/g.

### Example 2

50 g curdlan as a molding auxiliary and 150 g hydroxypropyl methyl cellulose (2 % by weight of an aqueous solution with a viscosity of 100,000 cPs at 20 °C ) were added to 1,000 g coconut shell based activated carbon (BET surface area of 1,600 m²/g and an average particle diameter of 3 µm) and mixed adequately in a vinyl bag. Then, this mixture was introduced into a biaxial kneader, and 930 g vinylidene chloride polymer latex (solid content of 55 % by weight) and 1,220 g vinylidene chloride-acrylate copolymer latex (solid content of 46 % by weight; vinylidene chloride content, 50 % by weight; and acrylate content, 50 % by weight), and 900 g water were added to it under stirring, and the mixture was kneaded for 2 hours. In this kneading, cold water at 10 °C was circulated for cooling through the jacket of the kneader.

The resulting composition containing the activated carbon, vinylidene chloride polymer, and vinylidene chloride-acrylate copolymer was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was subjected to preliminary heating treatment in hot air at 180 °C for 4 hours, then placed in a sealed vessel, and calcined in an electric furnace at 700 °C for 1.5 hours to give a sheet-shaped activated carbon electrode. The peak of macropore diameters of the resulting electrode was 40,000 angstrom and the volume of pores with 30 angstrom or more in diameters was 0.93 ml/g.

### Example 3

400 g fumaric acid (molecular weight: 116.07) as an organic material, 50 g curdlan as a molding auxiliary and 150 g hydroxypropyl methyl cellulose (2 % by weight of an aqueous solution with a viscosity of 100,000 cPs at 20 °C ) were added to 1,000 g of coconut shell based activated carbon (BET surface area of 1,200 m²/g and an average particle diameter of 7 µm) and mixed adequately. Then, this mixture was introduced into a biaxial kneader, and 2500 g vinylidene chloride polymer latex (solid content of 55 % by weight) and 414 g water were added to it under stirring, and the mixture was kneaded for 2 hours. In this kneading, cold water at 10 °C was circulated for cooling through the jacket of the kneader.

The resulting composition containing the activated carbon, vinylidene chloride polymer, and fumaric acid was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was subjected to preliminary heating treatment in hot air at 200 °C for 2 hours, then placed in a sealed vessel, and calcined in an electric furnace at 600 °C for 3 hours to give a sheet-shaped activated carbon electrode. The peak of macropore diameters of this electrode was 36,000 angstrom and the volume of pores with 30 angstrom or more in diameter was 0.85 ml/g.

### Example 4

400 g terephthalic acid (molecular weight: 166.13) as an organic material, 50 g curdlan as a molding auxiliary and 150 g hydroxypropyl methyl cellulose (2 % by weight of an aqueous solution with a viscosity of 100,000 cPs at 20 °C ) were added to 1,000 g of coconut shell based activated carbon (BET surface area of 1,200 m²/g and an average particle diameter of 7 µm) and mixed adequately. Then, this mixture was introduced into a biaxial kneader, and 2500 g vinylidene chloride polymer latex (solid content of 55 % by weight) and 414 g water were added to it under stirring, and the mixture was kneaded for 2 hours. In this kneading, cold water at 10 °C was circulated for cooling through the jacket of the kneader.

The composition of activated carbon-vinylidene chloride polymer-fumaric acid thus obtained was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 250 °C for 2 hours, then placed in a sealed vessel, and calcined in an electric furnace at 950 °C for 1 hour to give a sheet for electrode. The peak of macropore diameters of the resulting electrode was 19,000 angstrom and the volume of pores with 30 angstrom or more was 0.72 ml/g.

### Example 5

400 g methyl polymethacrylate beads (average particle diameter: 17 µm) as an organic material, 50 g curdlan as a molding auxiliary and 150 g hydroxypropyl methyl cellulose (2 % by weight of an aqueous solution with a viscosity of 100,000 cPs at 20 °C) were added to 1,000 g of coconut shell based activated carbon (BET surface area of 1,200 m²/g and an average particle diameter of 7 µm) and mixed adequately. Then, this mixture was introduced into a biaxial kneader, and 2,500 g vinylidene chloride polymer latex (solid content of 55 % by weight) and 900 g water were added to it under stirring, and the mixture was kneaded for 2 hours. In this kneading, cold water at 10 °C was circulated for cooling through the jacket of the kneader.

The composition of activated carbon-vinylidene chloride polymer-fumaric acid thus obtained was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 350 °C for 1 hour, then placed in a sealed vessel, and calcined in an electric furnace at 900 °C for 1 hour to give a sheet for electrode. The peak of macropore diameters of the resulting electrode was 20,500 angstrom and the volume of pores with 30 angstrom or more pores was 0.75 ml/g.

### Example 6

400 g methyl polystyrene beads (average particle diameter: 20 µm) as an organic material, 50 g curdlan as a molding auxiliary and 150 g hydroxypropyl methyl cellulose (2 % by weight of an aqueous solution with a viscosity of 100,000 cPs at 20 °C ) were added to 1,000 g coconut shell based activated carbon (BET surface area of 1,200 m²/g and an average particle diameter of 7 µm) and mixed adequately. Then, this mixture was introduced into a biaxial kneader, and 2,500 g vinylidene chloride polymer latex (solid content of 55 % by weight) and 900 g water were added to it under stirring, and the mixture was kneaded for 2 hours. In this kneading, cold water at 10 °C was circulated for cooling through the jacket of the kneader.

The activated carbon-vinylidene chloride polymer-fumaric acid composition thus obtained was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 300 °C for 2 hours, then placed in a sealed vessel, and calcined in an electric furnace at 1000 °C for 1 hour to give a sheet for electrode. The peak of macropore diameters of the resulting electrode was 11,000 angstrom and the volume of pores with 30 angstrom or more pores was 0.69 ml/g.

### Example 7

400 g methyl polystyrene beads (average particle diameter: 50 µm) as an organic material, 50 g curdlan as a molding auxiliary and 150 g hydroxypropyl methyl cellulose (2 % by weight of an aqueous solution with a viscosity of 100,000 cPs at 20 °C ) were added to 1,000 g coconut shell based activated carbon (BET surface area of 1,200 m²/g and an average particle diameter of 7 µm) and mixed adequately. Then, this mixture was introduced into a biaxial kneader, and 2,500 g vinylidene chloride polymer latex (solid content of 55 % by weight) and 900 g water were added to it under stirring, and the mixture was kneaded for 2 hours. In this kneading, cold water at 10 °C was circulated for cooling through the jacket of the kneader.

The composition of activated carbon-vinylidene chloride polymer-fumaric acid thus obtained was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 300 °C for 2 hours, then placed in a sealed vessel, and calcined in an electric furnace at 1000 °C for 1 hour to give a sheet for electrode. The peak of macropore diameters of the resulting electrode was 11,000 angstrom and the volume of pores with 30 angstrom or more was 0.82 ml/g.

### Comparative Example 1

50 g curdlan as a molding auxiliary and 150 g hydroxypropyl methyl cellulose (2 % by weight of an aqueous solution with a viscosity of 100,000 cPs at 20 °C ) were added to 1,000 g of coconut shell based activated carbon (BET surface area of 1,600 m²/g and an average particle diameter of 7 µm) and mixed adequately. Then, this mixture was introduced into a biaxial kneader, and 1,800 g vinylidene chloride polymer latex (solid content of 55 % by weight) and 800 g water were added to it under stirring, and the mixture was kneaded for 2 hours. In this kneading, cold water at 10 °C was circulated for cooling through the jacket of the kneader.

The resulting composition containing the activated carbon and vinylidene chloride polymer was introduced into an extruder (DE-35 type, produced by Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 300 °C for 2 hours, then placed in a sealed vessel, and calcined in an electric furnace at 900 °C for 1 hour to give a sheet for electrode. The peak of macropore diameters of the resulting electrode was 7,000 angstrom and the volume of pores with 30 angstrom or more was 0.45 ml/g.

### Comparative Example 2

50 g curdlan as a molding auxiliary and 150 g hydroxypropyl methyl cellulose (2 % by weight of an aqueous solution with a viscosity of 100,000 cPs at 20 °C ) were added to 1,000 g coconut shell based activated carbon (BET surface area of 1,600 m²/g and an average particle diameter of 7 µm) and mixed adequately. Then, this mixture was introduced into a biaxial kneader, and 2,520 g vinylidene chloride polymer latex (solid content of 55 % by weight) and 560 g water were added to it under stirring, and the mixture was kneaded for 2 hours. In this kneading, cold water at 10 °C was circulated for cooling through the jacket of the kneader.

The resulting composition containing the activated carbon, vinylidene acrylate polymer, and vinylidene chloride copolymer was introduced into an extruder (DE-35 type, Honda Tekko K. K.) and kneaded under vacuum to give a molding composition. Then, a sheet-forming mold was attached to the above extruder, and the molding composition was formed into a sheet of 5 cm width and 1 mm thickness. This molded material was dried at 115 °C for 5 hours. Then this dried product was pre-treated in hot air at 300 °C for 2 hours, then placed in a sealed vessel, and calcined in an electric furnace at 900 °C for 1 hour to give a sheet for electrode. The peak of macropore diameters of the resulting electrode was 6,000 angstrom and the volume of pores with 30 angstrom or more was 0.4 ml/g.

### Capacitance Measurement

The sheets for electrode, obtained in the Examples and Comparative Examples, were cut into sheets of 10× 10 mm. Out of them, 2 sheets were allowed to face to each other via an insulating porous separator and immersed in an electrolyte (40 weight % aqueous sulfuric acid solution), and both outer sides were sandwiched between current collectors (platinum plates) to prepare a sample (electric double-layer capacitor) to be measured for capacitance. This capacitor was charged at 0.9 V for 30 minutes and then discharged at 30 mA/cm² and 300 mA/cm² to determine capacitance. The results are shown in [Table 1].

**[Table 1]**

| | Capacitance (F/cc) at 300 mA/cm² | Capacitance (F/cc) at 30 mA/cm² |
|---|---|---|
| Example 1 | 17.5 | 24.7 |
| Example 2 | 16.7 | 23.3 |
| Example 3 | 15.5 | 25.6 |
| Example 4 | 10.5 | 24.8 |
| Example 5 | 11.0 | 23.9 |
| Example 6 | 10.1 | 24.9 |
| Example 7 | 13.5 | 23.7 |
| Comparative Example 1 | 5.0 | 25.6 |
| Comparative Example 2 | 1.0 | 26.0 |

### Industrial Applicability

The electrode of the present invention shows high capacitance per unit volume and low internal resistance even when discharged in large current. In addition, the electrode of the present invention is superior to impact resistance regardless of its macropores with larger pores and higher voids than those of conventional electrodes. Accordingly, the electric double-layer capacitor using the present electrode is expected not only as back-up power source for computers or IC memories but also as a power source for driving electric automobiles as well as various motors.

Further, it can be expected in a wide range of applications as an electrode for general batteries.

## Claims

1. Activated carbon electrode obtained by calcining a starting molding material for electrodes comprising activated carbon, a vinylidene chloride polymer and/or a vinylidene chloride copolymer, and other organic material to be thermally decomposed by calcining to form macropores.

2. The activated carbon electrode according to claim 1 wherein the other organic material is not molten, thermally decomposed or sublimated at a temperature of less than 130 °C , and has solubility in water of 2 w/w % (25 °C) or less.

3. The activated carbon electrode according to claim 2 wherein the other organic material is a polymeric compound with a molecular weight of 1,000 or more.

4. The activated carbon electrode according to claim 3 wherein the polymeric compound is thermoplastic resin.

5. The activated carbon electrode according to claim 2 wherein the other organic material is carboxylic acid or an acid anhydride, salt or ester thereof.

6. The activated carbon electrode according to claim 1 wherein the starting molding material for electrodes comprises, as dry solid, 5 to 90 % by weight of activated carbon, 5 to 90 % by weight of a partial structure derived from a vinylidene chloride monomer and 3 to 50 % by weight of the other organic material.

7. The activated carbon electrode according to claim 1 wherein the molding auxiliary is incorporated into the starting molding material for electrodes.

8. The activated carbon electrode according to claim 7 wherein the molding auxiliary is incorporated into the starting molding material for electrodes in an amount of 0.5 to 50 % by weight as dry solid.

9. The activated carbon electrode according to claim 7 or 8 wherein the molding auxiliary is polysaccharide.

10. The activated carbon electrode according to claim 9 wherein the polysaccharide is β-1,3-glucan.

11. The activated carbon electrode according to claim 1 wherein the calcining is carried out at 500 to 1,200 °C.

12. The activated carbon electrode according to claim 1 wherein the molding material for electrodes is sheet-shaped.

13. The activated carbon electrode according to claim 1 which has a peak of macropore diameters between 9,000 and 80,000 angstrom, and the total volume of pores with a diameter of 30 angstrom or more of 0.5 to 1.1 ml/g.

14. Process for producing activated carbon electrodes which comprises calcining at 500 to 1,200°C a starting molding material for electrodes comprising activated carbon, a vinylidene chloride polymer, and other organic material to be thermally decomposed by calcining to form macropores.

15. The process for producing activated carbon electrodes according to claim 14 wherein before calcining, the starting molding material for electrodes is subjected to preheating treatment at 130 to 400 °C.

16. The process for producing activated carbon electrodes according to claim 14 wherein the molding auxiliary is incorporated into the starting molding material for electrodes.
